# EUROPEAN PATENT SPECIFICATION

(11) **EP 3 590 832 B1**
(45) Date of publication and mention of the grant of the patent: **06.10.2021**
(21) Application number: 18400021.4
(22) Date of filing: 05.07.2018
(51) Int. Cl.: B64C 27/54, B64C 27/605

(54) **A CONTROL SYSTEM FOR CONTROLLING THE PITCH OF ROTOR BLADES**
STEUERUNGSSYSTEM ZUR STEUERUNG DER ROTORBLATTVERSTELLUNG
SYSTÈME DE COMMANDE POUR COMMANDER LE PAS DE PALES DE ROTOR

(43) Date of publication of application: 08.01.2020
(73) Proprietor: AIRBUS HELICOPTERS DEUTSCHLAND GmbH, 86609 Donauwörth (DE); Airbus Helicopters, 13725 Marignane Cedex (FR)
(72) Inventor: Pfaller, Rupert, 85521 Riemerling (DE); Güzel, Ahmet, 86609 Donauwörth (DE); Paques, Maxime, 13180 Gignac La Nerthe (FR)
(74) Representative: GPI & Associés

(56) References cited:
- EP-A1- 2 979 978
- EP-A1- 3 281 869
- EP-A2- 0 452 248
- US-A1- 2007 128 037
- US-A1- 2016 101 851

## Description

The invention is related to a control system for controlling the pitch of rotor blades of a multi-blade rotor in a rotary-wing aircraft, and, more particularly, to the actuator fork and the actuator arms of the control system for controlling the pitch of rotor blades.

A control system for controlling the pitch of rotor blades of a multi-blade rotor in a rotary-wing aircraft is used in operation for rotating the rotor blades around associated blade pitch axes by means of suitable pitch levers associated with the rotor blades that are operated by corresponding pitch control rods. Each pitch control rod is, therefore, connected to a rotating plate that rotates in operation with and around a rotor axis of the rotor. This rotating plate is usually mounted to rotate on a non-rotating plate, which is restrained against any rotation around the rotor axis of the rotor by a connection that connects the non-rotating plate to a non-rotatable underlying structure of the rotary-wing aircraft, such as its fuselage or main gear box.

The rotating plate and the non-rotating plate define a so-called swash plate assembly and are usually annular and surround the rotor axis. This swash plate assembly is activatable by means of a suitable control input unit via associated control actuators for respectively controlling the pitch of the rotor blades. More specifically, the swash plate assembly is adapted to transfer control inputs from a non-rotating system that includes the suitable control input unit and the non-rotating plate to a rotating system that includes the rotating plate and, when being mounted to the rotary-wing aircraft, also the rotor blades of the multi-blade rotor, i.e. the rotatable rotor as such.

The rotating and non-rotating plates are usually displaceable axially parallel to the rotor axis for controlling collective pitch, and in general they can be tilted in any direction around the rotor axis for controlling cyclic pitch, e.g. by means of an axially displaceable central spherical bearing. The latter, on which the non-rotating plate is mounted in an oscillating manner, is generally centered on the rotor axis.

While the control systems of bigger rotary-wing aircrafts frequently use spherical bearings as described above, control systems of some smaller and mid-size rotary-wing aircrafts often use gimbals with e.g. cardan-joint or u-joint rings for mounting at least a non-rotating plate of a swash plate assembly of the control system in an oscillating manner. The gimbals can be mounted on associated sliding sleeves. In such control systems, corresponding control inputs to the swash plate assembly can be mixed by a control input unit that is e.g. a so-called mixing lever gear unit and arranged underneath the swash plate assembly.

For collective pitch control, i.e. a change of the pitch angle of the rotor blades independent of the angular position around the rotor axis, the sliding sleeve can be displaced axially parallel to a rotor axis of the associated rotor by a mixing lever gear unit fork of the mixing lever gear unit. For cyclic pitch control, i.e. a change of the pitch angle of the rotor blades based on the angular position of the rotor blades around the rotor axis, the mixing lever gear unit may tilt the swash plate.

The document EP 0 452 248 A2 describes a composite scissor for a swash plate. The composite scissor assembly utilizes one or more flexible composite straps disposed either in a radial or non-radial relationship between a hub attached to a rotor shaft and an inner or outer ring of a helicopter swashplate. The composite material has sufficient edge-wise stiffness to allow effective torque transmission between the rotor shaft and the swashplate yet has sufficient flexibility to allow for a vertical and angular displacement of the swashplate relative to the rotor shaft. Utilizing a flexible composite scissor assembly eliminates the need for mechanical linkages having pins and bearings which are a frequent source for wear, increasing the reliability of the rotor assembly, while reducing weight.

The document EP 2 979 978 A1 describes a control system with a central spherical bearing on which a non-rotating plate of a swash plate assembly is mounted. The spherical bearing is mounted to a non-rotating sliding sleeve, wherein a rotor shaft of an associated rotor is rotatably received. This non-rotating sliding sleeve can be displaced axially parallel to a rotor axis of the rotor for controlling collective pitch, while rotating and non-rotating plates of this control system can be tilted in any direction around the rotor axis for controlling cyclic pitch. For controlling axial displacement of the non-rotating sliding sleeve in operation, a fork unit with an associated actuator arm is provided. The associated actuator arm is pivotally mounted to a mounting part of the non-rotating sliding sleeve, which is formed at - or by - a lower section of the non-rotating sliding sleeve. The actuator arm is further hinged on a hinge support such that a rotational movement of the actuator arm on the hinge support upon activation is translatable into a pivotal movement of the actuator arm on the non-rotating sliding sleeve at the mounting part that is adapted to cause an axial displacement on the rotor shaft of the non-rotating sliding sleeve.

However, during the rotational movement of the actuator arm and, thus, during collective pitch control, a predetermined distance between an underlying hinge axis defined by the hinge support and the rotor shaft increases or decreases dependent on a respectively resulting sliding direction of the non-rotating sliding sleeve on the rotor shaft that is induced by the actuator arm. In other words, due to a linear shifting of the non-rotating sliding sleeve along the rotor shaft, respective joints of the actuator arm to the hinge support perform an additional movement Δs, which is essentially oriented in horizontal direction with respect to a normal orientation of a given rotary-wing aircraft on ground and varies up to several millimeters during the rotational movement of the actuator arm. This additional movement Δs in combination with high forces, of e. g. about 60kN for a 3-ton rotary-wing aircraft, must be handled by the hinge support.

Therefore, the hinge support is designed as a complex mechanical component that is usually made of metal and comprises a hinge carrier, a bearing block and suitable bearing attaches that connect the hinge carrier to the bearing block, such as spherical bearings or liner bushes. The hinge carrier is connected to the actuator arm, e. g. by means of a suitable hinge rod that defines the hinge axis, so that the actuator arm can perform its rotational movement around this hinge rod. The bearing block in turn is fixedly mounted to a main gear box of an associated rotary-wing aircraft.

It should be noted that the hinge carrier and the bearing block as well as the mixing lever gear unit including, for example, an actuator fork and an associated actuator arm need to absorb comparatively high loads coming from an associated multi-blade main rotor of an associated rotary-wing aircraft. These loads include high compression and tension combined with shear forces.

Moreover, the control system including the hinge carrier, the bearing block, the non-rotating sliding sleeve, the actuator fork, and the associated actuator arm is comparatively heavy and comprises a comparatively great number of individual components. Furthermore, it is comparatively clumsy, in particular due to the use of the spherical bearings or liner bushes between the hinge carrier and the bearing block and requires comparatively extensive maintenance efforts. Moreover, as this complex hinge support is usually at least essentially made up of metal, it is prone to corrosion.

Other hinge supports are exemplarily described in the documents US 2,829,721, US 2,534,353, US 2,537,623, US 2,599,690, US 2,444,070 and US 3,006,418. These documents respectively describe control systems for controlling the pitch of rotor blades of a multi-blade rotor in a rotary-wing aircraft, which are at least similar to the above described control system. Other documents have been cited, i.e.: EP0301994, EP3281869, US2016101851 and US2007128037.

Thus, in summary, the control system for controlling the pitch of rotor blades of a rotary-wing aircraft includes critical, high fatigue loaded parts such as an actuator fork and actuator arms. These parts are connected by control links by means of journal bearings and bolts. The actuator fork and the actuator arms have a bearing base around which they rotate. Moreover, in conventional control systems, the actuator fork includes a single supported pivot bearing for the actuator arm, which is loaded in bending at the actuator fork.

It is, therefore, an objective to provide a new control system for controlling the pitch of rotor blades of a multi-blade rotor in a rotary-wing aircraft. The new control system includes a new actuator arm and a new actuator fork, which are both light weight, reliable, stiff, easy to manufacture, have a superior fatigue resistance, and are suitable to replace the actuator arms and actuator fork of conventional control systems.

Furthermore, the support for the actuator arm pivot bearing should be improved by an appropriate design of the actuator fork to improve the fatigue behavior of the actuator fork.

This objective is solved by a new pitch control system of a multi-blade rotor in a rotary-wing aircraft, as defined in claim 1. More specifically, a control system for controlling at least collective pitch of rotor blades of a multi-blade rotor in a rotary-wing aircraft, wherein the multi-blade rotor comprises a rotor shaft that defines an associated rotor axis, includes a non-rotating sliding sleeve that is mountable to the rotor shaft such that the non-rotating sliding sleeve is axially displaceable coaxially to the associated rotor axis on the rotor shaft, an actuator arm, an actuator bearing that has first and second attachment points, and an actuator fork that is pivotally mounted to the non-rotating sliding sleeve, the actuator fork being adapted for axially displacing the non-rotating sliding sleeve that is mounted to the rotor shaft upon activation. The actuator arm is mounted in a manner that allows rotation around an actuator arm rotation axis on the actuator arm pivot bearing between the first and second attachment points. The actuator fork provides a first support for the first attachment point of the actuator arm pivot bearing and a second support for the second attachment point of the actuator arm pivot bearing, wherein the second support is located in an overarching flange that at least partially encompasses the actuator arm.

In particular, the actuator fork may provide two separate supports for the actuator arm pivot bearing. The actuator fork may provide the two separate supports for the actuator arm pivot bearing using an overarching flange, which is sometimes also referred to as a lug design. The actuator fork, including the overarching flange, may have a cross section with a high moment of inertia and be reinforced, if desired. For example, the actuator fork may have reinforcing elements such as a stiffening bridge, webs, flanges, web connections between the two sides of the fork, and/or frame work design for bending loads, just to name a few reinforcing elements.

In some embodiments, the actuator fork and/or the actuator arm may at least partially be made of a composite material. The composite material may have a monolithic fiber design with low weight and high fatigue strength. The monolithic fiber design may include web areas and upper and lower flanges. Except around the holes, which may receive bearings and control inputs and outputs, the fibers may be oriented mainly in +/- 45° at the web areas and in 0° at the upper and lower flanges.

The actuator fork and/or the actuator arms may have a U-shape, with a comparatively high height that maximizes the bending inertia of the actuator fork. The comparatively high height of the actuator fork may distribute the bending moment caused by the two actuator arms at the side of the actuator fork to two walls. If desired, more than one actuator fork or actuator arm may be manufactured at once. For example, at least two actuator forks and/or at least two actuator arms may be manufactured in one manufacturing step and then be separated e.g. through cutting into the at least two actuator forks and/or the at least two actuator arms.

A deformation of the overarching flanges of the actuator fork due to bending and shear should be avoided. Such a deformation may lead to no load introduction to the overarching flanges. Thus, the overarching flanges of the actuator fork may not carry any load and could be omitted. Weak overarching flanges in bending and shear may have a similar effect as omitting the overarching flanges. As a result, the actuator arm pivot bearing would be more or less single supported and highly loaded in bending.

To avoid deformation of the overarching flanges of the actuator fork, the overarching flanges may be reinforced by an element with a high moment of inertia. Such an element with a high moment of inertia may be located on top of the actuator fork.

In some embodiments, bearing load introduction with a diameter to edge distance ratio greater than 0.5 may result in an actuator fork design with a big height compared to existing actuator fork designs and lead to a high stiffness and low weight. If desired, web and/or flange designs may be introduced for bending loads.

The new design of the actuator fork and the actuator arms avoids loading of the actuator arm pivot bearing in bending which improves the safety of the actuator arm pivot bearing. The new design also avoids a one-sided bearing of the actuator arm pivot bearing and thereby a transfer of high bending loads into the actuator fork. Furthermore, a simple U-shape of the actuator fork and/or actuator arm ensures easy manufacturing of the parts and a simple tooling concept.

According to one embodiment, the actuator fork is at least partially made from a composite material. The composite material may include a reinforcing phase and a matrix material that forms a skin together with the reinforcing phase.

According to one embodiment, the actuator fork may have two edges, wherein the reinforcing phase has a first orientation that is parallel to the two edges at each one of the two edges, and second and third orientations that are shifted by plus 45 degrees and minus 45 degrees, respectively, with respect to the two edges and between the two edges.

According to one embodiment, the first support may include a hole of a predetermined diameter. The outside of the hole may have a distance from each one of the two edges that is greater than half the predetermined diameter.

According to one embodiment, the control system may include reinforcing elements that reinforce the actuator fork to prevent deformation of the overarching flange as a result of loading the actuator arm.

According to one embodiment, the reinforcing elements may include a concave profile across the actuator fork parallel to the actuator arm rotation axis and a web that is arranged in a plane perpendicular to the actuator arm rotation axis.

According to one embodiment, the web is a kinked web.

According to one embodiment, the reinforcing elements may include a web that is arranged in a plane parallel to the actuator arm rotation axis.

According to one embodiment, the reinforcing elements may include a convex profile across the actuator fork parallel to the actuator arm rotation axis.

According to one embodiment, the reinforcing elements may include a progressive concave profile across at least a portion of the actuator fork parallel to the actuator arm rotation axis, wherein the depth of the progressive concave profile increases progressively in direction from the first to the second support.

According to one embodiment, the reinforcing elements may include strengthening flanges that are arranged in a plane parallel to the actuator arm rotation axis.

According to one embodiment, the actuator arm has a U-shaped profile.

According to one embodiment, the actuator arm is made at least partially from a composite material. The actuator arm and at least one additional actuator arm may be manufactured in one curing cycle.

According to one embodiment, the actuator fork and at least one additional actuator fork are manufactured in one curing cycle.

According to an embodiment, a rotary-wing aircraft may include a control system for controlling at least collective pitch of rotor blades of a multi-blade rotor as described above.

Embodiments are outlined by way of example in the following description with reference to the attached drawings. In these attached drawings, identical or identically functioning components and elements are labeled with identical reference numbers and characters and are, consequently, only described once in the following description.
- Figure 1 is a diagram of an illustrative rotary-wing aircraft with a control system and an enlarged perspective view of the control system in accordance with some embodiments,
- Figure 2 is a diagram of an illustrative actuator fork of a control system with an overarching flange that supports an actuator arm with an actuator arm pivot bearing in accordance with some embodiments,
- Figure 3 is a diagram of a cross section of an illustrative actuator fork of a control system with an overarching flange that provides a double support for a U-shaped actuator arm with an actuator arm pivot bearing in accordance with some embodiments,
- Figure 4 is a diagram of an illustrative actuator fork of a control system made from composite materials showing the orientation of the reinforcing phase in accordance with some embodiments,
- Figure 5 is a diagram of an illustrative actuator fork of a control system with an overarching flange that illustrates the bearing load introduction with a diameter to edge distance ratio in accordance with some embodiments,
- Figure 6 is a diagram of an illustrative actuator fork of a control system with an illustrative reinforcing element in accordance with some embodiments,
- Figure 7 is a diagram of an illustrative actuator fork of a control system with reinforcing elements that include a concave profile and a web in accordance with some embodiments,
- Figure 8A is a diagram of an illustrative actuator fork of a control system with reinforcing elements that include a concave profile, a kinked web, and a web in accordance with some embodiments,
- Figure 8B is a diagram of a cross section of an illustrative actuator fork of a control system with reinforcing elements that include a concave profile, a kinked web, and a web in accordance with some embodiments,
- Figure 9 is a diagram of an illustrative actuator fork of a control system with reinforcing elements that include a convex profile and a kinked web in accordance with some embodiments,
- Figure 10 is a diagram of an illustrative actuator fork of a control system with reinforcing elements that include progressive concave profiles in accordance with some embodiments,
- Figure 11 is a diagram of a cross section of an illustrative actuator fork of a control system with reinforcing elements that include a progressive concave profile, a strengthening flange, and a kinked web in accordance with some embodiments,
- Figure 12A is a diagram of multiple illustrative actuator arms of a control system that are manufactured in one curing cycle in accordance with some embodiments, and
- Figure 12B is a diagram of two illustrative actuator forks of a control system that are manufactured in one curing cycle in accordance with some embodiments.

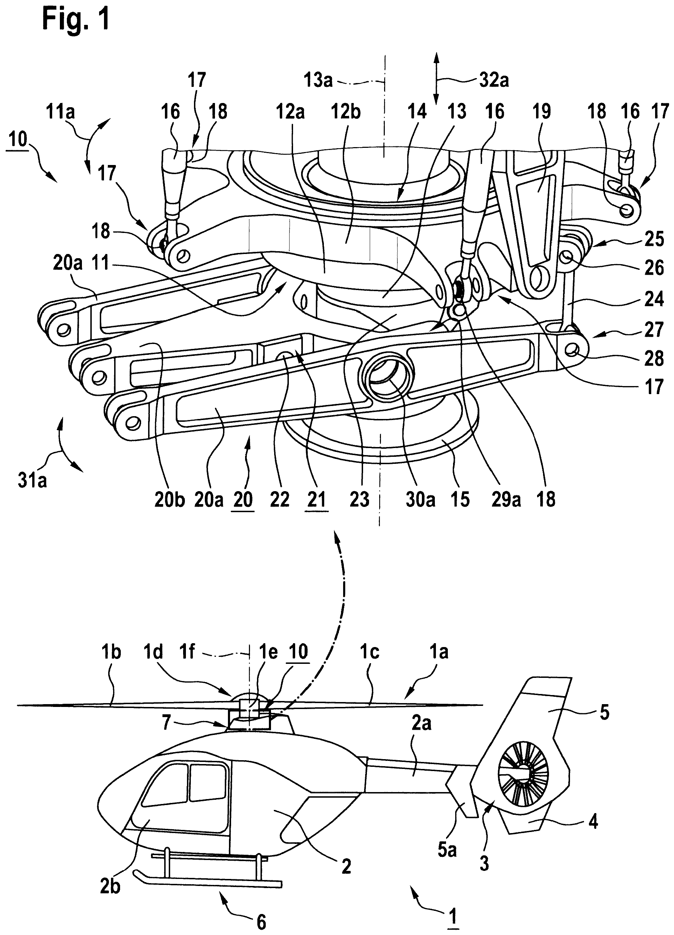

Figure 1 shows a rotary-wing aircraft 1 with a fuselage 2 that is connected to a landing gear 6, said fuselage 2 defining a tail boom 2a and a cabin 2b. The rotary-wing aircraft 1 comprises at least one multi-blade rotor 1a for providing lift and forward or backward thrust during operation. The at least one multi-blade rotor 1a comprises a plurality of rotor blades 1b, 1c that are mounted at an associated rotor head 1d to a rotor shaft 1e, which rotates in operation of the rotary-wing aircraft 1 around an associated rotor axis 1f.

By way of example, the rotary-wing aircraft 1 is embodied as a helicopter, which comprises at least one counter-torque device 3 configured to provide counter-torque during operation, i.e. to counter the torque created by rotation of the at least one multi-blade rotor 1a for purposes of balancing the rotary-wing aircraft 1 in terms of yaw. The at least one counter-torque device 3 is illustratively provided at an aft section of the tail boom 2a, which may comprise a bumper 4, a horizontal stabilizer 5a, and a fin 5.

However, it should be noted that the at least one counter-torque device 3, the horizontal stabilizer 5a as well as the fin 5 with the bumper 4 provided at the aft section of the tail boom 2a are merely described for illustrating one exemplary embodiment of the rotary-wing aircraft 1 and not for limiting the invention accordingly. Instead, the present embodiments as described hereinafter can likewise be applied to any rotary-wing aircraft and, in particular, any helicopter, independent of a respective construction of the aft section thereof.

According to one aspect, the rotary-wing aircraft 1 comprises a control system 10 for controlling at least collective pitch of the rotor blades 1b, 1c of the at least one multi-blade rotor 1a. If desired, control system 10 may control collective and cyclic pitch of the rotor blades 1b, 1c of the at least one multi-blade rotor 1a. The control system 10, which is further detailed in an enlarged perspective detail view, may be arranged at least partly on the rotor shaft 1e between the rotor head 1d of the at least one multi-blade rotor 1a and a main gear box 7 of the rotary-wing aircraft 1.

The control system 10 comprises at least a non-rotating sliding sleeve 13 that is mountable, and illustratively mounted to the rotor shaft 1e such that the non-rotating sliding sleeve 13 is axially displaceable coaxially to the rotor axis 1f on the rotor shaft 1e. The non-rotating sliding sleeve 13 is connected to at least one actuator fork 20b that is pivotally mounted to the non-rotating sliding sleeve 13 and adapted for axially displacing the non-rotating sliding sleeve 13 that is mounted to the rotor shaft 1e upon activation.

If desired, control system 10 may include at least one hinge support 21 that is adapted for a hinged support of the at least one actuator fork 20b such that a rotational movement of the at least one actuator fork 20b on the at least one hinge support 21 upon activation is translatable into a pivotal movement of the at least one actuator fork 20b on the non-rotating sliding sleeve 13 that is adapted to cause an axial displacement of the non-rotating sliding sleeve 13 that is mounted to the rotor shaft 1e on the rotor shaft 1e in predetermined axial displacement directions 32a. The at least one hinge support 21 may include at least one carrier element that is adapted for carrying the at least one actuator fork 20b. If desired, the at least one carrier element may comprise fiber reinforced composite material.

The at least one hinge support 21 and, more specifically, the at least one carrier element may carry the at least one actuator fork 20b by means of an associated support member 22. The support member 22 may be embodied as a support rod that defines an associated rotation axis, around which the at least one actuator fork 20b can be rotated to perform the above described rotational movement in predetermined rotational movement directions 31a.

According to one example, control system 10 may comprise swash plate assembly 11 with at least one non-rotating plate 12a and at least one rotating plate 12b that is mounted rotatably to the at least one non-rotating plate 12a. Illustratively, the at least one rotating plate 12b defines an upper swash plate and the at least one non-rotating plate 12a defines a lower swash plate of this swash plate assembly 11.

The at least one non-rotating and rotating plates 12a, 12b may be at least partly disk-shaped and connected to each other by means of an associated roller or ball bearing that allows relative rotational movement between these plates 12a, 12b. In this configuration, the at least one non-rotating and rotating plates 12a, 12b may be mainly superposed. However, they can also, or alternatively, be at least partly ring-shaped. In such a configuration, the at least one rotating plate 12b mainly encompasses the at least one non-rotating plate 12a.

According to one example, the at least one rotating plate 12b and the at least one non-rotating plate 12a are mounted to the non-rotating sliding sleeve 13 having an associated sliding sleeve axis 13a. If desired, the non-rotating sliding sleeve 13 may be glidingly arranged on a non-rotating sliding sleeve guide 15. This non-rotating sliding sleeve guide 15 is adapted for accommodating at least partly the rotor shaft 1e of the at least one multi-blade rotor 1a, which illustratively extends in its longitudinal extension through said non-rotating sliding sleeve guide 15. In some examples, the non-rotating sliding sleeve guide 15 is adapted for rigid fixation to a non-rotating part of the rotary-wing aircraft 1. Illustratively, the non-rotating sliding sleeve guide 15 is rigidly attached to the main gear box 7 of the rotary-wing aircraft 1, e. g. by means of screwing, bolting or bonding.

According to one example, the at least one rotating plate 12b is rotatable around the associated sliding sleeve axis 13a of the non-rotating sliding sleeve 13 and mounted with the at least one non-rotating plate 12a to a spherical bearing 14 that is provided on the non-rotating sliding sleeve 13. For instance, the spherical bearing 14 is embodied as a ball joint with a ball, which is rigidly attached to the non-rotating sliding sleeve 13 or integrally formed in one piece therewith.

In some examples, the at least one rotating plate 12b and the at least one non-rotating plate 12a are mounted to the spherical bearing 14 such that they are tiltable in any direction around the associated sliding sleeve axis 13a by means of said spherical bearing 14. Allowable tilting angles between the associated sliding sleeve axis 13a and the at least one non-rotating and rotating plates 12a, 12b may not exceed 20°, if desired.

The at least one rotating plate 12b may be connectable to each one of the rotor blades 1b, 1c by means of an associated pitch control rod 16. Therefore, external radial clevises 17, equal in number to the rotor blades 1b, 1c, are distributed over an external periphery of the at least one rotating plate 12b, and in each such external radial clevis 17 a ball joint 18 is held, which articulates a lower end of an associated pitch control rod 16, while its upper end can be articulated, and is illustratively articulated, in a pitch lever of an associated one of the rotor blades 1b, 1c. In some examples, the at least one rotating plate 12b is at least indirectly rotatably connectable, and is illustratively connected, to the rotor shaft 1e of the multi-blade rotor 1a by means of at least one associated rotating torque link, which is by way of example a rotating arm 19.

For controlling tilting and/or axial displacement of the at least one rotating plate 12b and the at least one non-rotating plate 12a in operation, a control input unit 20 is provided. This control input unit 20 may comprise two actuator arms 20a and one actuator fork 20b, which may be a fork unit 20b, such as a so-called mixing lever gear unit. Each actuator arm 20a is illustratively shown as a lateral or outer arm of the control input unit 20. If desired, each actuator arm 20a may be rotatably connected to actuator fork 20b, which is illustratively shown as an inner fork, by means of an associated actuator arm pivot bearing 30a.

The actuator arm 20a is connected to the at least one non-rotating plate 12a by means of associated swash plate control rods 24 for controlling tilting of the at least one non-rotating plate 12a and, thus, of the at least one rotating plate 12b in any required tilting direction 11a around the rotor axis 1f, thereby performing cyclic pitch control of the rotor blades 1b, 1c. Therefore, external radial clevises 25, equal in number to the associated swash plate control rods 24, are provided on an external periphery of the at least one non-rotating plate 12a, and in each such external radial clevis 25 a ball joint 26 is held, which articulates an upper end of an associated swash plate control rod 24, while its lower end is articulated in a corresponding ball joint 28, which is held in a clevis 27 provided on an extremity of an associated actuator arm 20a.

As described above, actuator fork 20b is provided for controlling axial displacement of the non-rotating sliding sleeve 13 in operation. Therefore, actuator fork 20b may be rotatably connected to a mounting part 23 of the non-rotating sliding sleeve 13 at a corresponding mounting point 29a. The mounting part 23 is illustratively formed at - or by - a lower section of the non-rotating sliding sleeve 13.

It should be noted that the above described configuration of the control system 10 is merely described for purposes of illustration and not for restricting the invention thereto. Instead, various modifications and variations are readily available and recognizable to the skilled person and, therefore, also considered as being part of the present invention, as longs as they fall within the scope of the appended claims. For instance, instead of the spherical bearing 14, gimbals with e.g. cardan-joint or u-joint rings for mounting at least the non-rotating plate 12a of the swash plate assembly 11 of the control system 10 in an oscillating manner can be used, etc.

In operation of the control system 10, a rotational movement of actuator fork 20b into one of the rotational movement directions 31a around the support member 22 is translated into an axial displacement of the non-rotating sliding sleeve 13 and, thus, of the swash plate assembly 11, into an associated one of the axial displacement directions 32a along the associated sliding sleeve axis 13a. Thereby, collective pitch of the rotor blades 1b, 1c, i.e. a change of the pitch angle of the rotor blades independent of the angular position around the rotor axis, can be controlled.

In some examples, a rotational movement of the at least one actuator arm 20a around the associated actuator arm pivot bearing 30a into one of the rotational movement directions 31a is translated via the associated swash plate control rods 24 into a tilting of the swash plate assembly 11 into a corresponding one of the swash plate tilting directions 11a around the associated sliding sleeve axis 13a. Thereby, cyclic pitch of the rotor blades 1b, 1c, i.e. a change of the pitch angle of the rotor blades based on the angular position of the rotor blades around the rotor axis can be controlled.

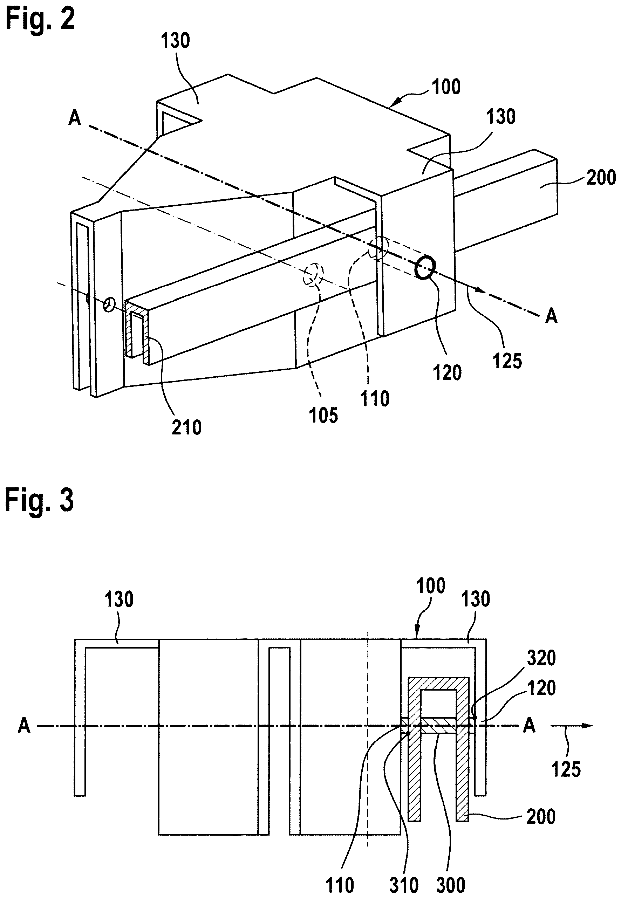

Figure 2 is a diagram of an illustrative actuator fork 100 of a control system such as control system 10 of Figure 1 with an overarching flange 130 that supports an actuator arm 200 with an actuator arm pivot bearing that has two attachment points. The actuator fork 100 is pivotally mounted to a non-rotating sliding sleeve such as non-rotating sliding sleeve 13 of Figure 1 at actuator fork attachment 105. The non-rotating sliding sleeve may be mounted to a rotor shaft such as rotor shaft 1e of Figure 1. The actoator fork 100 is adapted for axially displacing the non-rotating sliding sleeve upon activation.

Actuator arm 200 is mounted in a manner that allows rotation around actuator arm rotation axis 125 on the actuator arm pivot bearing between the two attachment points. Illustratively, actuator arm 200 may have U-shaped profile 210. As shown, actuator arm 200 may be mounted on the actuator arm pivot bearing such that the opening of the U-shaped profile faces away from overarching flange 130. If desired, actuator arm 200 may be mounted on the actuator arm pivot bearing such that the opening of the U-shaped profile faces towards overarching flange 130.

Actuator fork 100 provides support 110 for one of the two attachment points of the actuator arm pivot bearing and support 120 for the other one of the attachment points of the actuator arm pivot bearing. As shown, support 120 is located in overarching flange 130 that at least partially encompasses actuator arm 200.

Figure 3 is a diagram of a cross section of an illustrative actuator fork 100 of a control system such as control system 10 of Figure 1 with overarching flange 130 that provides a double support for a U-shaped actuator arm 200 with an actuator arm pivot bearing 300.

Actuator fork 100 provides support 110 for attachment point 310 of actuator arm pivot bearing 300 and support 120 for attachment point 320 of actuator arm pivot bearing 300. As shown, support 120 is located in overarching flange 130 that at least partially encompasses actuator arm 200.

Although in Figures 2 to 12, flange 130 with support 120 is shown as an overarching flange, a supporting flange with the same features is considered to be an equivalent to the overarching flange. As an example, it would be clear to a skilled person that were actuator fork 100 be turned upside-down, the flange with support 120 would become a supporting flange.

Actuator arm 200 is shown to have a rectangular U-shaped profile 210. If desired, actuator arm 200 may have any U-shaped profile including a rounded U-shaped profile, a U-shaped profile with flanges, webs, or other reinforcements, etc. As shown, actuator arm 200 may be mounted on actuator arm pivot bearing 300 such that the opening of U-shaped profile 210 faces away from overarching flange 130. If desired, actuator arm 200 may be mounted on actuator arm pivot bearing 300 such that the opening of U-shaped profile 210 faces towards overarching flange 130.

In some embodiments, actuator fork 100 and/or actuator arm 200 may be at least partially made from composite materials. For example, the composite material may form a skin using a matrix material, which is sometimes also referred to as a matrix phase or a background material, and a transforming material, which is sometimes also referred to as a reinforcement or a reinforcing phase. Examples for reinforcements include fibers and fabrics such as glass fibers, carbon fibers, aramid fibers, basalt fibers, flax, textiles, ceramic fibers, as well as carbon nanotubes, or any other reinforcement material that is suitable for forming a skin together with a matrix material. Examples for matrix materials include resins, polymers, ceramics, etc., or any other matrix material that is suitable for forming a skin together with a transforming material.

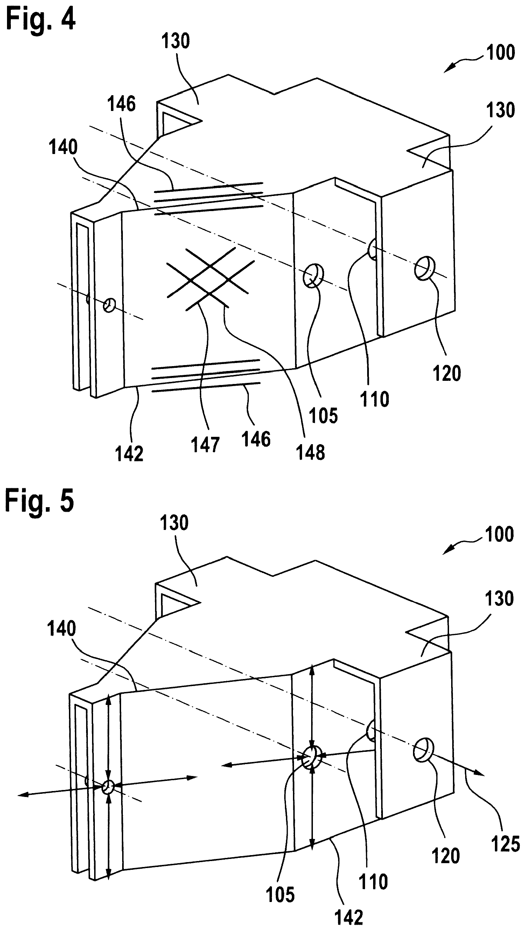

Figure 4 is a diagram of an illustrative actuator fork of a control system such as control system 10 of Figure 1 made from composite materials showing the orientation of the reinforcing phase.

As shown, actuator fork 100 may have edges 140 and 142. If desired, the reinforcing phase may have an orientation 146 that is parallel to the edges 140 and 142 in an area close to the edges. In some embodiments, the reinforcing phase may have orientations 147 and 148 that are shifted by plus 45 degrees and minus 45 degrees, respectively, with respect to the edges 140 and 142 in an area between the edges.

In some embodiments, actuator fork 100 may be provided with a comparatively high stiffness based on selecting a ratio between the diameter of a hole (e.g., the hole for actuator fork attachment 105) and the distance of that hole from the edges of actuator fork 100. Figure 5 is a diagram of illustrative actuator fork 100 with overarching flange 130 that illustrates the bearing load introduction with a diameter to edge distance ratio.

As shown in Figure 5, actuator fork 100 may have holes such as holes for actuator fork attachment 105 and supports 110, 120. Each of these holes may have a predetermined diameter, which may be the same for all the holes. If desired, at least one hole may have a different diameter than the other holes. In some embodiments, first support 110 of actuator arm 100 may have a hole of a predetermined diameter, whereby the outside of the hole has a distance from each one of the two edges 140 and 142 that is greater than half the predetermined diameter of the hole. If desired, each hole in actuator arm 100 (e.g., hole for actuator fork attachment 105, hole for support 110, hole for support 120, etc.) may have a distance from each one of the two edges 140 and 142 that is greater than half the predetermined diameter of the respective hole.

A deformation of overarching flange 130 may prevent load introduction to support 120 with the result that support 120 may not carry any load, and thus, overarching flange 130 could be omitted. This may leave the actuator arm pivot bearing (300 in Figure 3) mostly supported by support 110, which is thereby comparatively highly loaded in bending. Therefore, it may be desirable to avoid deformation of overarching flange 130 due to bending and/or shear.

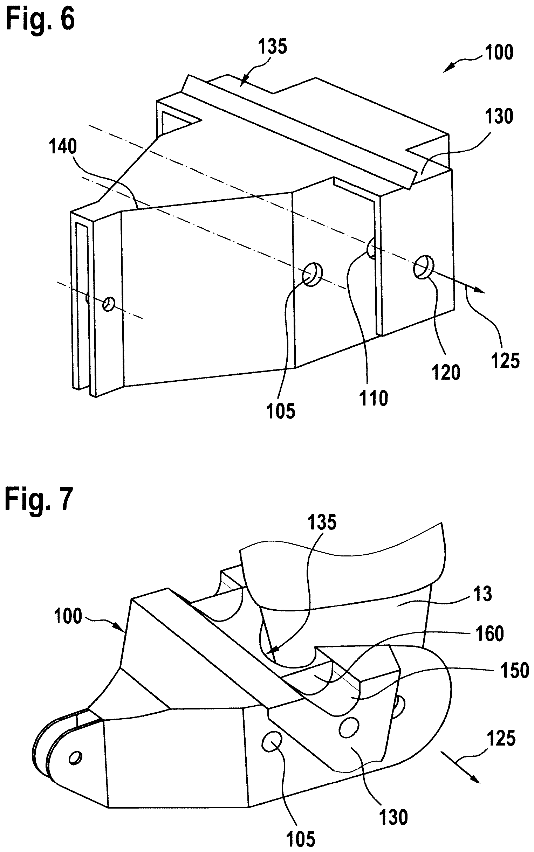

To avoid bending and/or shear of overarching flange 130, overarching flange 130 may be reinforced with one or more reinforcing elements that have a high moment of inertia. Figure 6 is a diagram of an illustrative actuator fork 100 of a control system such as control system 10 of Figure 1 with an illustrative reinforcing element 135. As shown in Figure 6, reinforcing element 135 may extend across actuator fork 100, parallel to actuator arm rotation axis 125.

Actuator arm 100 may include different reinforcing elements 135 that reinforce actuator fork 100 to prevent deformation of the overarching flange 130 through bending and/or shear as a result of loading the actuator arm 200. Exemplary embodiments of reinforcing elements 135 that reinforce actuator fork 100 and assist in avoiding bending and/or shear of overarching flange 130 are shown in Figures 7 to 11.

Figure 7 is a diagram of an illustrative actuator fork of a control system such as control system 10 of Figure 1 with reinforcing elements 135 that include concave profile 150 and web 160 in accordance with some embodiments. As shown in Figure 7, concave profile 150 may extend across actuator fork 100 parallel to actuator arm rotation axis 125. If desired, concave profile 150 may have a cut out at non-rotating sliding sleeve 13. In some embodiments, concave profile 150 may have a U-shape. If desired, concave profile 150 may have a V-shape, a W-shape, or any other shape that assists in reinforcing overarching flange 130.

If desired, actuator fork 100 may include web 160. Web 160 may extend across concave profile 150. If desired, web 160 may be arranged in a plane perpendicular to the actuator arm rotation axis 125. As an example, web 160 may be arranged in the same plane as actuator fork attachment 105. As another example, web 160 may be arranged in a plane that is perpendicular to actuator arm rotation axis 125 and parallel to the plane in which actuator fork attachment 105 is arranged.

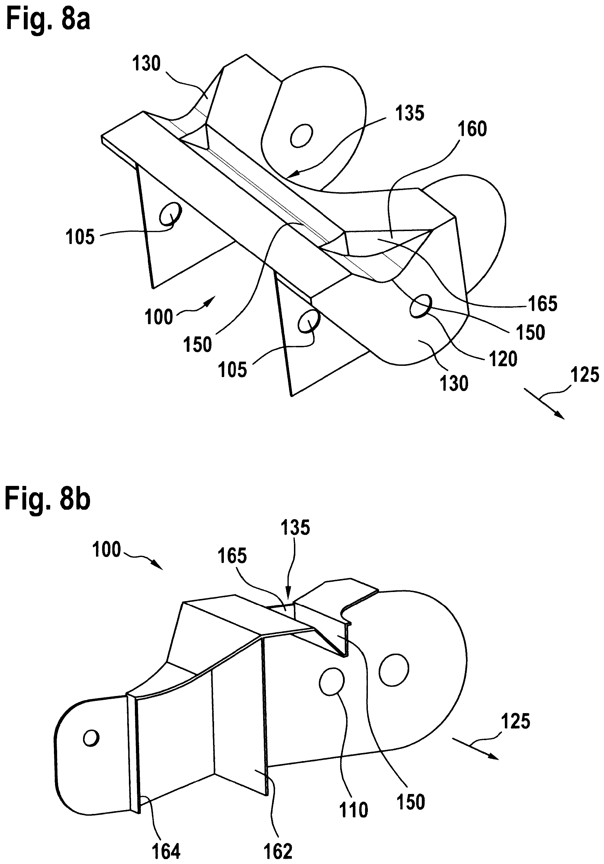

Figure 8A is a diagram of illustrative actuator fork 100 of a control system such as control system 10 of Figure 1 with reinforcing elements 135 that include concave profile 150 and web 160 in accordance with some embodiments.

As shown in Figure 8A, web 160 may be a kinked web 165. Kinked web 165 may be arranged diagonally to actuator arm rotation axis 125. For example, kinked web 165 may have a straight portion and a kinked portion. The straight portion of kinked web 165 may extend across concave profile 150 in a plane that is perpendicular to actuator arm rotation axis 125 and includes actuator fork attachment 105. The kinked portion of kinked web 165 may extend across overarching flange 130 from the straight portion of kinked web 165 to another plane that is perpendicular to actuator arm rotation axis 125 and may include support 120.

Concave profile 150 may extend across actuator fork 100 parallel to actuator arm rotation axis 125. If desired, concave profile 150 may have a cut out at the non-rotating sliding sleeve, which may be reinforced by a flange. In some embodiments, concave profile 150 may have first and second portions. The first portion of concave profile 150 may extend across the cut out at the non-rotating sliding sleeve between two straight portions of kinked web 165. The second portion of concave profile 150 may extend across overarching flange 130.

In some embodiments, both portions of concave profile 150 may have the same shape. If desired, the first portion of concave profile 150 may have a different shape than the second portion of concave profile 150. The first and second portions of concave profile 150 may have any shape that assists in reinforcing overarching flange 130. For example, the first and/or second portion of concave profile 150 may have a U-shape, a V-shape, a W-shape, or any other appropriate concave shape. If desired, first and second portions of concave profile 150 may have a different opening width.

Figure 8B is a diagram of a cross section of an illustrative actuator fork 100 of a control system such as control system 10 of Figure 1 with reinforcing elements 135 that include concave profile 150, kinked web 165, and web 162 in accordance with some embodiments.

As shown in Figure 8B, web 162 may be arranged in a plane parallel to the actuator arm rotation axis 125. If desired, concave profile 150 may have a V-shape, and web 162 may be parallel to one side of the V-shape. Web 162 may extend across actuator fork 100 between walls that each include a support 110 for an actuator arm pivot bearing such as actuator arm pivot bearing 300 of Figure 3. In some embodiments, actuator fork 100 may have an additional web 164 that extends parallel to web 162.

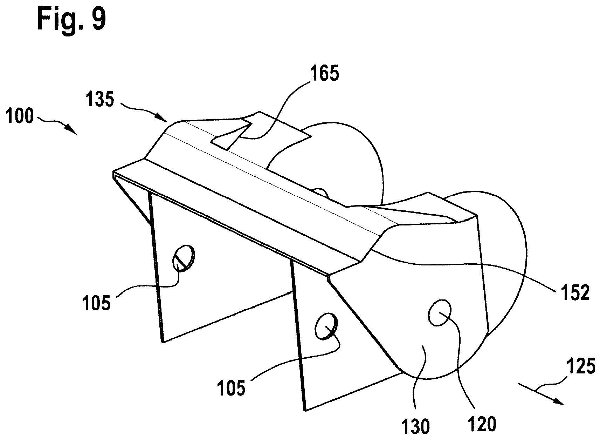

Figure 9 is a diagram of illustrative actuator fork 100 of a control system such as control system 10 of Figure 1 with reinforcing elements 135 that include convex profile 152 and kinked web 165 in accordance with some embodiments.

As shown in Figure 9, convex profile 152 may extend across actuator fork 100 parallel to actuator arm rotation axis 125. In some embodiments, convex profile 152 may have a U-shape. If desired, convex profile 152 may have a V-shape, a W-shape, or any other shape that assists in reinforcing overarching flange 130.

Kinked web 165 may extend at least partially across overarching flange 130. For example, kinked web 165 may extend at least partially between a first plane that is perpendicular to actuator arm rotation axis 125 and may include actuator fork attachment 105 and a second plane that is perpendicular to actuator arm rotation axis 125 and may include support 120.

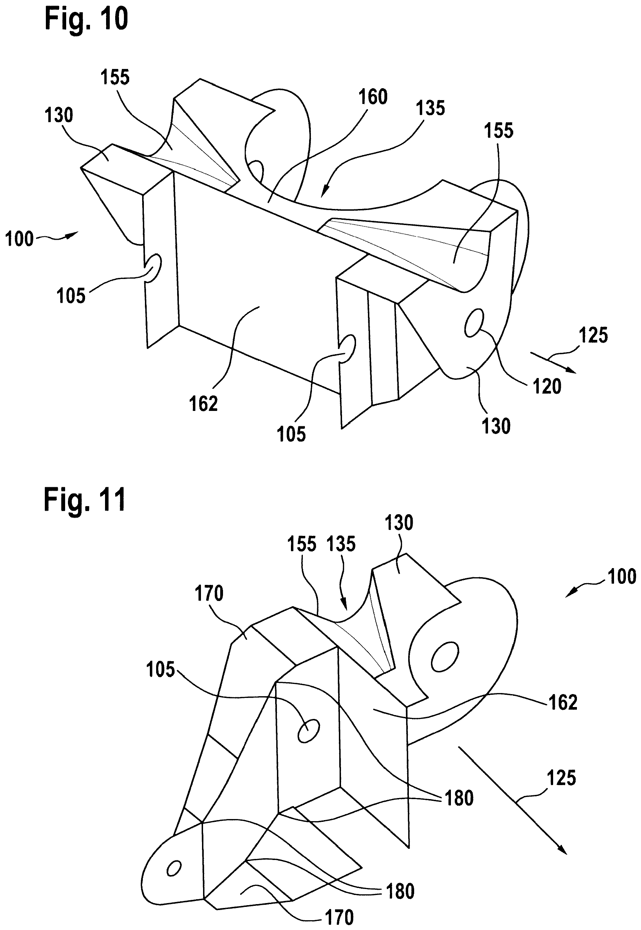

Figure 10 is a diagram of illustrative actuator fork 100 of a control system such as control system 10 of Figure 1 with reinforcing elements 135 that include progressive concave profiles 155 in accordance with some embodiments.

As shown in Figure 10, two progressive concave profiles 155 may extend across a portion of actuator fork 100 parallel to actuator arm rotation axis 125. The depth and/or the width of the opening of each progressive concave profile 155 may increase progressively from the center of actuator fork 100 to the second support 120 located in overarching flange 130. In some embodiments, progressive concave profiles 155 may have a U-shape. If desired, progressive concave profiles 155 may have a V-shape, a W-shape, or any other shape that assists in reinforcing overarching flange 130.

If desired, the two progressive concave profiles 155 may be separated by a flange or a web 160. In some examples, actuator fork 100 may have an additional web 162 that is perpendicular to web 160. Web 162 may extend across actuator fork 100 between walls that each include actuator fork attachment 105.

Figure 11 is a diagram of a cross section of an illustrative actuator fork 100 of a control system such as control system 10 of Figure 1 with reinforcing elements 135 that include progressive concave profile 155, strengthening flanges 170, and kinks 180 in accordance with some embodiments.

As shown in Figure 11, strengthening flanges 170 may be arranged in a plane parallel to the actuator arm rotation axis 125. Strengthening flanges 170 may transfer normal loads such as tension and compression loads. If desired, flanges may support at least some of kinks 180 of actuator fork 100, for example to avoid bending at areas in which those kinks 180 are located.

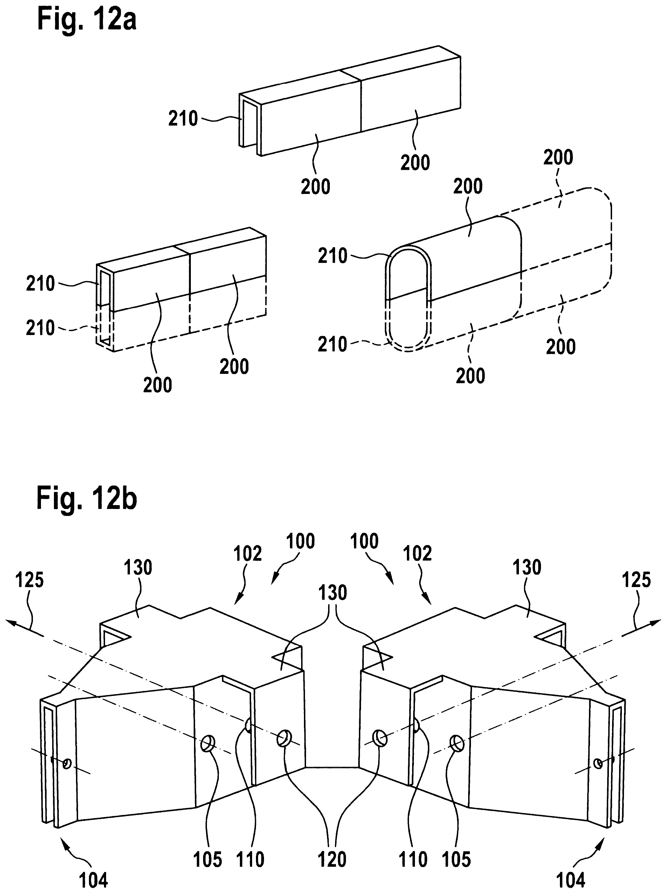

Figure 12A is a diagram of multiple illustrative actuator arms 200 of a control system such as control system 10 of Figure 1 that are made from at least one composite material, have a U-shaped profile 210, and may be manufactured in one curing cycle.

As shown in Figure 12A, two U-shaped actuator arms 200 may be manufactured as one long U-shaped bar in one curing cycle. The one long U-shaped bar may be cut after manufacturing into two U-shaped actuator arms. If desired, more than two U-shaped actuator arms 200 may be manufactured as one long U-shaped bar in one curing cycle. For example, three, four, five, etc. U-shaped actuator arms may be manufactured as one long U-shaped bar and cut after manufacturing into the appropriate number of U-shaped actuator arms 200.

In some embodiments, two U-shaped actuator arms 200 may be manufactured as one part attached by the opening of the U-shape, thereby forming a rectangular profile or an oval profile as shown in Figure 12A. If desired, more than two U-shaped actuator arms 200 may be manufactured as one part attached by the opening of the U-shape in one curing cycle. For example, four, six, eight, etc. U-shaped actuator arms may be manufactured as one part attached by the opening of the U-shaped and cut after manufacturing into the appropriate number of U-shaped actuator arms 200.

Figure 12B is a diagram of two illustrative actuator forks 100 of a control system such as control system 10 of Figure 1 that are manufactured in one curing cycle.

If desired, the two actuator forks 100 may be manufactured together attached at ends 102 or attached at ends 104 and cut after manufacturing into two actuator forks. In some embodiments, more than two actuator forks 100 may be manufactured together and cut into the appropriate number of actuator forks 100 after manufacturing.

It should be noted that the above described embodiments are merely described to illustrate possible realizations of the present invention, but not in order to restrict the present invention thereto. Instead, multiple modifications and variations of the described embodiments are possible and should, therefore, also be considered as being part of the invention, the scope thereof being defined by the appended claims.

By way of example, reinforcing elements 135 of Figures 7 to 11 may include a mix of more than one of a concave, convex, progressive concave, or progressive convex profile. These profiles may be reinforced with webs, if desired.

Moreover, different reinforcing elements 135 from Figures 7 to 11 may be combined. As an example, strengthening flanges 170 of Figure 11 may be combined with webs 162 of Figure 8B to provide for additional stiffness. As another example, actuator fork 100 of Figure 9 may be provided with webs 162. As yet another example, actuator fork 100 of Figure 9 may have a convex profile that evolves into a progressive convex profile in direction from the center of actuator fork 100 to overarching flange 130.

Furthermore, actuator arm 200 of Figures 2, 3, and 12A is shown to have a U-shaped profile. If desired, actuator arm 200 may have a different profile. For example, actuator arm 200 may have a rectangular profile, an oval profile, an I-profile, just to name a few.

Moreover, actuator arm 200 and/or actuator fork 100 may be made from a composite material that includes a core material, if desired.

### Reference List

- 1: rotary-wing aircraft
- 1a: multi-blade rotor
- 1b, 1c: rotor blades
- 1d: rotor head
- 1e: rotor shaft
- 1f: rotor axis
- 2: fuselage
- 2a: tail boom
- 2b: cabin
- 3: counter-torque device
- 4: bumper
- 5: fin
- 5a: horizontal stabilizer
- 6: landing gear
- 7: main gear box
- 10: control system
- 11: swash plate assembly
- 11a: swash plate tilting directions
- 12a: non-rotating plate
- 12b: rotating plate
- 13: non-rotating sliding sleeve
- 13a: sliding sleeve axis
- 14: spherical bearing
- 15: non-rotating sliding sleeve guide
- 16: pitch control rods
- 17: rotating plate clevises
- 18: rotating plate ball joints
- 19: rotating arms
- 20: control input unit
- 20a: outer actuator arms
- 20b: inner actuator fork
- 21: inner actuator fork hinge support
- 22: inner actuator fork support member
- 23: sliding sleeve mounting part
- 24: swash plate control rods
- 25: non-rotating plate clevises
- 26: non-rotating plate ball joints
- 27: actuator fork clevises
- 28: actuator fork ball joints
- 29a: inner actuator fork mounting point
- 30a: actuator arm pivot bearing
- 31a: actuator fork rotational movement directions
- 32a: sliding sleeve axial displacement directions
- 100: actuator fork
- 102, 104: end of actuator fork
- 105: actuator fork attachment
- 110, 120: support
- 125: actuator arm rotation axis
- 130: overarching flange
- 135: reinforcing elements
- 140, 142: edges
- 146, 147, 148: orientation of the reinforcing phase
- 150: concave profile
- 152: convex profile
- 155: progressive concave profile
- 160,162,164: web
- 165: kinked web
- 170: strengthening flange
- 180: kink
- 200: actuator arm
- 210: U-shaped profile
- 300: actuator arm pivot bearing
- 310, 320: attachment points

## Claims

1. A control system (10) for controlling at least collective pitch of rotor blades (1b, 1c) of a multi-blade rotor (1a) in a rotary-wing aircraft (1), wherein the multi-blade rotor (1a) comprises a rotor shaft (1e) that defines an associated rotor axis (1f), the control system (10) comprising:
a non-rotating sliding sleeve (13) that is mountable to the rotor shaft (1e) such that the non-rotating sliding sleeve (13) is axially displaceable coaxially to the associated rotor axis (1f) on the rotor shaft (1e);
an actuator arm (20a, 200);
an actuator arm pivot bearing (30a, 300) that has first (310) and second (320) attachment points; and
an actuator fork (20b, 100) that is pivotally mounted to the non-rotating sliding sleeve (13), the actuator fork (20b, 100) being adapted for axially displacing the non-rotating sliding sleeve (13) that is mounted to the rotor shaft (1e) upon activation,
**characterized in that**
the actuator arm (20a, 200) is mounted in a manner that allows rotation around an actuator arm rotation axis (125) on the actuator arm pivot bearing (30a, 300) between the first (310) and second (320) attachment points, and
the actuator fork (20b, 100) includes an overarching flange (130) and provides a first support (110) for the first attachment point (310) of the actuator arm pivot bearing (30a, 300) and a second support (120) for the second attachment point (320) of the actuator arm pivot bearing (30a, 300), wherein the second support (120) is located in the overarching flange (130) of the actuator fork (20b, 100) that at least partially encompasses the actuator arm (20a, 200).

2. The control system (10) of claim 1, wherein the actuator fork (20b, 100) is at least partially made from a composite material and wherein the composite material comprises:
a reinforcing phase; and
a matrix material that forms a skin together with the reinforcing phase.

3. The control system (10) of claim 2, wherein the actuator fork (100) has two edges (140, 142), wherein the reinforcing phase has a first orientation (146) that is parallel to the two edges at each one of the two edges, and second (147) and third (148) orientations that are shifted by plus 45 degrees and minus 45 degrees, respectively, with respect to the two edges and between the two edges.

4. The control system (10) of claim 3, wherein the first support (110) comprises a hole of a predetermined diameter and wherein the outside of the hole has a distance from each one of the two edges (140, 142) that is greater than half the predetermined diameter.

5. The control system (10) of any one of the preceding claims, further comprising:
reinforcing elements (135) that reinforce the actuator fork (100) to prevent deformation of the overarching flange (130) as a result of loading the actuator arm (200).

6. The control system (10) of claim 5, wherein the reinforcing elements (135) further comprise:
a concave profile (150) across the actuator fork (100) parallel to the actuator arm rotation axis (125); and
a web (160) that is arranged in a plane perpendicular to the actuator arm rotation axis (125).

7. The control system (10) of claim 6, wherein the web (160) is a kinked web (165).

8. The control system (10) of claim 5, wherein the reinforcing elements (135) further comprise:
a web (162) that is arranged in a plane parallel to the actuator arm rotation axis (125).

9. The control system (10) of claim 5, wherein the reinforcing elements (135) further comprise:
a convex profile (152) across the actuator fork (100) parallel to the actuator arm rotation axis (125).

10. The control system (10) of claim 5, wherein the reinforcing elements (135) further comprise:
a progressive concave profile (155) across at least a portion of the actuator fork (20b) parallel to the actuator arm rotation axis (125), wherein the depth of the progressive concave profile (155) increases progressively in direction from the first (110) to the second (120) support.

11. The control system (10) of claim 5, wherein the reinforcing elements (135) further comprise:
strengthening flanges (170) that are arranged in a plane parallel to the actuator arm rotation axis (125).

12. The control system (10) of any one of the preceding claims, wherein the actuator arm (200) has a U-shaped profile (210).

13. The control system (10) of claim 12, wherein the actuator arm (200) is made at least partially from a composite material, and wherein the actuator arm (200) and at least one additional actuator arm (200) are manufactured in one curing cycle.

14. The control system (10) of any one of the preceding claims, wherein the actuator fork (100) and at least one additional actuator fork (100) are manufactured in one curing cycle.

15. A rotary-wing aircraft (1) with the control system (10) for controlling at least collective pitch of rotor blades (1b, 1c) of a multi-blade rotor (1a) according to any one of the preceding claims.

## Patentansprüche

1. Steuersystem (10) zum Steuern zumindest des kollektiven Anstellwinkels von Rotorblättern (1b, 1c) eines Mehrblattrotors (1a) in einem Drehflügelflugzeug (1), wobei der Mehrblattrotor (1a) eine Rotorwelle (1e) umfasst, die eine zugeordnete Rotorachse (1f) definiert, wobei das Steuersystem (10) umfasst:
eine nichtdrehende Schiebemuffe (13), die an der Rotorwelle (1e) so montierbar ist, dass die nichtdrehende Schiebemuffe (13) koaxial zur zugeordneten Rotorachse (1f) auf der Rotorwelle (1e) axial verschiebbar ist;
einen Betätigungsarm (20a, 200);
ein Betätigungsarm-Drehlager (30a, 300), das einen ersten (310) und einen zweiten (320) Befestigungspunkt aufweist; und
eine Betätigungsgabel (20b, 100), die schwenkbar an der nichtdrehenden Schiebemuffe (13) angebracht ist, wobei die Betätigungsgabel (20b, 100) eingerichtet ist, um bei Aktivierung die an der Rotorwelle (1e) angebrachte nichtdrehende Schiebemuffe (13) axial zu verschieben,
**dadurch gekennzeichnet, dass**
der Betätigungsarm (20a, 200) am Betätigungsarm-Drehlager (30a, 300) zwischen dem ersten (310) und dem zweiten (320) Befestigungspunkt um eine Betätigungsarm-Drehachse (125) drehbar gelagert ist, und
die Betätigungsgabel (20b, 100) einen übergreifenden Flansch (130) aufweist und eine erste Stütze (110) für den ersten Befestigungspunkt (310) des Betätigungsarm-Schwenklagers (30a, 300) und eine zweite Stütze (120) für den zweiten Befestigungspunkt (320) des Betätigungsarm-Schwenklagers (30a, 300) bereitstellt, wobei die zweite Stütze (120) in dem übergreifenden Flansch (130) der Betätigungsgabel (20b, 100) angeordnet ist, der den Betätigungsarm (20a, 200) zumindest teilweise umgreift.

2. Steuersystem (10) nach Anspruch 1, bei dem die Betätigungsgabel (20b, 100) zumindest teilweise aus einem Verbundwerkstoff hergestellt ist, und bei dem der Verbundwerkstoff
eine Verstärkungsphase; und
ein Matrixmaterial, das zusammen mit der Verstärkungsphase eine Haut bildet, umfasst.

3. Steuersystem (10) nach Anspruch 2, bei dem die Betätigungsgabel (100) zwei Kanten (140, 142) aufweist, wobei die Verstärkungsphase eine erste Ausrichtung (146), die an jeder der beiden Kanten parallel zu den beiden Kanten verläuft, sowie eine zweite (147) und eine dritte (148) Ausrichtung aufweist, die in Bezug auf die beiden Kanten und zwischen den beiden Kanten um plus 45 Grad bzw. minus 45 Grad verschoben sind.

4. Steuersystem (10) nach Anspruch 3, bei dem die erste Stütze (110) ein Loch mit einem vorgegebenen Durchmesser umfasst und bei dem die Außenseite des Lochs einen Abstand von jeder der beiden Kanten (140, 142) hat, der größer als die Hälfte des vorgegebenen Durchmessers ist.

5. Steuersystem (10) nach einem der vorhergehenden Ansprüche, das ferner umfasst:
Verstärkungselemente (135), die die Betätigungsgabel (100) verstärken, um eine Verformung des überstehenden Flansches (130) infolge der Belastung des Betätigungsarms (200) zu verhindern.

6. Steuersystem (10) nach Anspruch 5, bei dem die Verstärkungselemente (135) ferner umfassen:
ein konkaves Profil (150) quer zur Betätigungsgabel (100) parallel zur Drehachse des Betätigungsarms (125); und
einen Steg (160), der in einer Ebene senkrecht zur Drehachse (125) des Betätigungsarms angeordnet ist.

7. Steuersystem (10) nach Anspruch 6, bei dem der Steg (160) ein geknickter Steg (165) ist.

8. Steuersystem (10) nach Anspruch 5, bei dem die Verstärkungselemente (135) ferner umfassen:
einen Steg (162), der in einer Ebene parallel zur Drehachse (125) des Betätigungsarms angeordnet ist.

9. Steuersystem (10) nach Anspruch 5, bei dem die Verstärkungselemente (135) ferner umfassen:
ein konvexes Profil (152) quer zur Betätigungsgabel (100) parallel zur Drehachse (125) des Betätigungsarms.

10. Steuersystem (10) nach Anspruch 5, bei dem die Verstärkungselemente (135) ferner umfassen:
ein progressives konkaves Profil (155) über mindestens einen Teil der Betätigungsgabel (20b) parallel zur Drehachse (125) des Betätigungsarms, wobei die Tiefe des progressiven konkaven Profils (155) in Richtung von der ersten (110) zur zweiten (120) Stütze progressiv zunimmt.

11. Steuersystem (10) nach Anspruch 5, bei dem die Verstärkungselemente (135) ferner umfassen:
Verstärkungsflansche (170), die in einer Ebene parallel zur Drehachse (125) des Betätigungsarms angeordnet sind.

12. Steuersystem (10) nach einem der vorhergehenden Ansprüche, bei dem der Betätigungsarm (200) ein U-förmiges Profil (210) aufweist.

13. Steuersystem (10) nach Anspruch 12, bei dem der Betätigungsarm (200) zumindest teilweise aus einem Verbundwerkstoff hergestellt ist, und bei dem der Betätigungsarm (200) und mindestens ein weiterer Betätigungsarm (200) in einem einzigen Aushärtungszyklus hergestellt sind.

14. Steuersystem (10) nach einem der vorhergehenden Ansprüche, bei dem die Betätigungsgabel (100) und mindestens eine zusätzliche Betätigungsgabel (100) in einem einzigen Aushärtungszyklus hergestellt sind.

15. Drehflügelflugzeug (1) mit dem Steuersystem (10) zur Steuerung zumindest des kollektiven Anstellwinkels von Rotorblättern (1b, 1c) eines Mehrblattrotors (1a) nach einem der vorhergehenden Ansprüche.

## Revendications

1. Système de commande (10) pour commander au moins un pas collectif de pales de rotor (1b, 1c) d'un rotor multipale (1a) dans un aéronef à voilure tournante (1), aéronef dans lequel le rotor multipale (1a) comprend un mât de rotor (1e) qui définit un axe de rotor (1f) associé, le système de commande (10) comprenant :
un manchon coulissant non rotatif (13) qui est agencé pour être monté sur le mât de rotor (1e) de sorte que le manchon coulissant non rotatif (13) soit axialement déplaçable de façon coaxiale à l'axe de rotor (1f) associé, sur le mât de rotor (1e) ;
un bras actionneur (20a, 200) ;
un palier de pivotement (30a, 300) du bras actionneur pourvu de premier (310) et second (320) points de fixation ; et
une fourche d'actionneur (20b, 100) qui est montée à pivotement sur le manchon coulissant non rotatif (13), la fourche d'actionneur (20b, 100) étant apte à déplacer de façon axiale le manchon coulissant non rotatif (13) qui est monté sur le mât de rotor (1e) lorsqu'elle est activée,
**caractérisé en ce que**
le bras actionneur (20a, 200) est monté de manière à permettre la rotation autour d'un axe de rotation (125) du bras actionneur sur le palier de pivotement (30a, 300) du bras actionneur entre les premier (310) et second (320) points de fixation, et
la fourche d'actionneur (20b, 100) inclut une bride de liaison (130) et présente un premier support (110) pour le premier point de fixation (310) du palier de pivotement (30a, 300) de bras actionneur et un second support (120) pour le second point de fixation (320) du palier de pivotement (30a, 300) du bras actionneur, et dans lequel le second support (120) est situé dans la bride de liaison (130) de la fourche d'actionneur (20b, 100) qui enveloppe au moins partiellement le bras actionneur (20a, 200).

2. Système de commande (10) selon la revendication 1, dans lequel la fourche d'actionneur (20b, 100) est au moins partiellement formée d'un matériau composite et dans lequel le matériau composite comprend :
une couche de renforcement ; et
un matériau matrice qui forme une peau avec la couche de renforcement.

3. Système de commande (10) selon la revendication 2, dans lequel la fourche d'actionneur (100) possède deux bords (140, 142), dans lequel la couche de renforcement présente une première orientation (146) qui est parallèle aux deux bords à l'emplacement de chacun des deux bords, ainsi qu'une seconde orientation (147) et une troisième orientation (148) qui sont décalées de plus 45 degrés et moins 45 degrés, respectivement par rapport aux deux bords et entre lesdits deux bords.

4. Système de commande (10) selon la revendication 3, dans lequel le premier support (110) comprend un trou d'un diamètre prédéterminé et dans lequel l'extérieur du trou est à une distance de chacun des deux bords (140, 142) qui est plus grande que la moitié du diamètre prédéterminé.

5. Système de commande (10) selon l'une quelconque des revendications précédentes, comprenant en outre :
des éléments de renforcement (135) qui renforcent la fourche d'actionneur (100) pour empêcher la déformation de la bride de liaison (130) à la suite d'efforts sur le bras actionneur (200).

6. Système de commande (10) selon la revendication 5, dans lequel les éléments de renforcement (135) comprennent en outre :
un profil concave (150) en travers de la fourche d'actionneur (100) et parallèle à l'axe de rotation (125) du bras actionneur ; et
une âme (160) qui est agencée dans un plan perpendiculaire à l'axe de rotation (125) du bras actionneur.

7. Système de commande (10) selon la revendication 6, dans lequel l'âme (160) est une âme présentant une torsion (165).

8. Système de commande (10) selon la revendication 5, dans lequel les éléments de renforcement (135) comprennent en outre :
une âme (162) qui est agencée suivant un plan parallèle à l'axe de rotation (125) du bras actionneur.

9. Système de commande (10) selon la revendication 5, dans lequel les éléments de renforcement (135) comprennent en outre :
un profil convexe (152) en travers de la fourche d'actionneur (100) et parallèle à l'axe de rotation (125) du bras actionneur.

10. Système de commande (10) selon la revendication 5, dans lequel les éléments de renforcement (135) comprennent en outre :
un profil progressif concave (155) traversalement au moins d'une partie de la fourche d'actionneur (20b) et parallèle à l'axe de rotation (125) du bras actionneur, dans lequel la profondeur du profil progressif concave (155) s'accroit progressivement suivant la direction du premier support (110) vers le second support (120).

11. Système de commande (10) selon la revendication 5, dans lequel les éléments de renforcement (135) comprennent en outre :
des flasques de renforcement (170) qui sont agencées suivant un plan parallèle à l'axe de rotation (125) du bras actionneur.

12. Système de commande (10) selon l'une quelconque des revendications précédentes, dans lequel le bras actionneur (200) présente un profil en forme de U (210).

13. Système de commande (10) selon la revendication 12, dans lequel le bras actionneur (200) est au moins partiellement formé d'un matériau composite, et dans lequel le bras actionneur (200) et au moins un bras actionneur additionnel (200) sont fabriqués en un cycle unique de polymérisation.

14. Système de commande (10) selon l'une quelconque des revendications précédentes, dans lequel la fourche d'actionneur (100) et au moins une fourche d'actionneur additionnelle (100) sont fabriquées en un cycle unique de polymérisation.

15. Aéronef à voilure tournante (1) pourvu du système de commande (10) pour commander au moins le pas collectif des pales de rotor (1b, 1c) d'un rotor multipale (1a) selon l'une quelconque des revendications précédentes.
